Europäisches Patentamt

European Patent Office

Office européen des brevets

(11) Publication number: **0 226 157**
**A2**

(12) **EUROPEAN PATENT APPLICATION**

(21) Application number: 86117034.8

(51) Int. Cl.⁴: **F16K 29/00**

(22) Date of filing: 08.12.86

(30) Priority: 12.12.85 IT 2317885

(43) Date of publication of application:
24.06.87 Bulletin 87/26

(84) Designated Contracting States:
AT BE CH DE ES FR GB IT LI NL SE

(71) Applicant: **TETRA DEV-CO**
**Via Delfini 1**
**I-411 00 Modena(IT)**

(72) Inventor: **Bordini, Giorgio**
**Via Luppi 8**
**S. Prospero (Modena)(IT)**

(74) Representative: **Bentz, Bengt Christer**
**TETRA PAK INTERNATIONAL AB Patent**
**Department Box 61**
**S-221 00 Lund(SE)**

(54) **Valve.**

(57) Valves used in lines for liquids containing particles may on occasion be prevented by particles adhering between the head and the seat of the valve from assuming a fully closed position. This is prevented by making the valve head capable of turning or rotating in respect of the seat, as a result of which obstructing particles can, by turning of the valve head, be cut off, crushed or by other means rendered harmless so that the valve can be fully closed.

EP 0 226 157 A2

## VALVE

The present invention relates to a valve comprising a valve head which can be controlled by a valve spindle as well as a valve seat co-operating with it.

When conveying fluids of various types in lines, valves are used to control the flow. Frequently use is made in this connection of valves of the type where a rotation symmetrical valve head can, as a result of external action, be displaced in a linear manner to bring it into contact with a circular valve seat. This type of valve generally comprises a valve head with a circular sealing edge or a sealing face in the form of a truncated cone, which in the closed position of the valve is brought into sealing contact with an annular valve seat (e.g. in the shape of a truncated cone) enclosing a passage through which the fluid flows.

This type of valve is well known and used very frequently for conveying various fluids. However, good functioning of the valve and a satisfactory sealing action in the closed position of the valve presuppose that the pumped medium does not contain particles in the shape of fibres, lumps or similar matter, which can adhere between the valve head and the valve seat when the valve is closed. Valves of the type described have therefore hitherto not been suitable for liquids containing solid or semi-solid particles, but recourse had to be taken to other types of valve.

It is an object of the present invention to provide a valve of the aforementioned main type, which is not subject to the said disadvantages and restrictions but is so designed as to be well suited for use in conjunction with fluids containing particles of various types.

It is a further object of the present invention to provide a valve which in the closed position is fully sealed in spite of the presence of particles between the valve head and the valve seat at the moment of closing.

It is a further object of the present invention to provide a valve, the basic design of which is still simple and which can therefore be manufactured and used in a cost-effective way.

These and other objects have been achieved in accordance with the invention by a valve comprising a valve head capable of being controlled by means of a valve spindle as well as a valve seat which has been given the characteristic that in the closed position of the valve, the valve head is capable of being turned in relation to the valve seat.

Preferred embodiments of the valve in accordance with the invention have been given, moreover, the characteristics which are evident from the subsidiary claims.

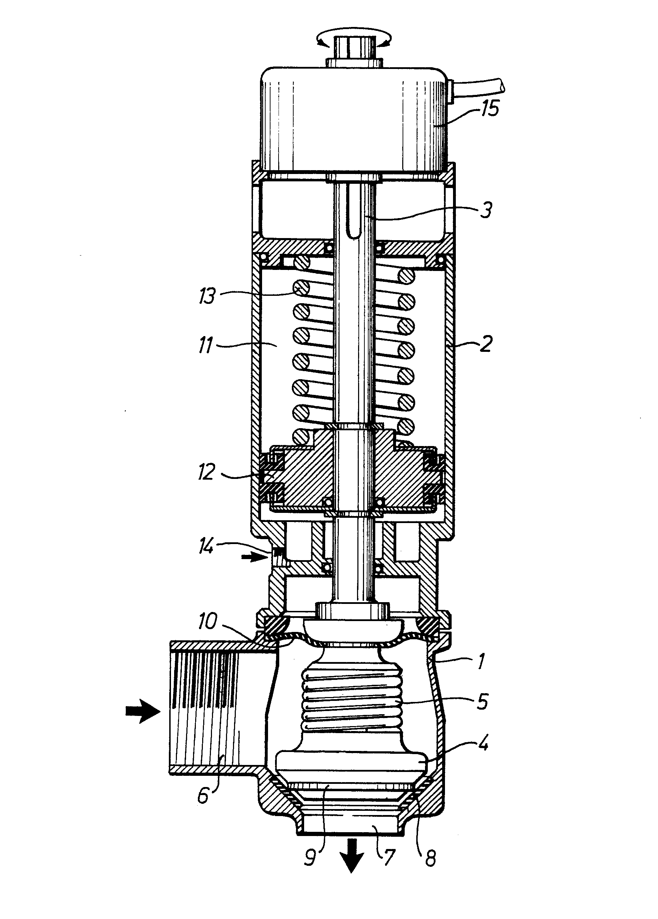

A preferred embodiment of the arrangement in accordance with the invention will now be described in greater detail with special reference to the attached drawing, which schematically and partly in section shows a valve in accordance with the invention in the closed position.

The valve according to the invention comprises a valve body 1 and a control casing 2 associated with it. Through control casing 2 extends a valve spindle 3 provided at its lower end with a valve head 4. The valve spindle and the valve head 4 are connected with one another by means of a flexible coupling 5, which may for instance consist of a helical spring.

In valve body 1 there are a radially extending inlet 6 and an axial outlet 7 leading to the lower end of the body. Surrounding the outlet 7 the valve body has a valve seat 8, which is annular and preferably designed as a truncated cone. The valve head has at its lower edge an annular edge 9, which in the closed position of the valve co-operates with the valve seat 8 and is in contact with it.

As aforementioned, the control casing 2 and valve body 1 are connected with one another, and between them there is a flexible, substantially annular membrane 10, which is clamped in a liquid-tight manner between the control casing 2 and the valve body 1 while adjoining the valve spindle 3 in a liquid-tight manner. The membrane 10 prevents the fluid flowing through the valve body 1 from reaching the upper part of the valve spindle or its bearings.

The upper part of the valve spindle 3 extends through a control chamber 11 located within the control casing 2, which while in sealing contact with the valve spindle 3 permits displacement of the latter. The valve spindle 3 is provided with a control piston 12 located within the control chamber 11, the said control piston being in sealing contact with the cylindrical inside of control chamber 11. Between the upper side of control piston 12 and the adjacent end wall of the control casing there is a helical control spring 13, which is clamped between the control casing and the control piston and strives to displace the latter in the downward direction so as to move the valve head 4 via valve spindle 3 to the closed position, i.e. the position in which the edge 9 is in contact with the valve seat 8. The force exerted by control spring 13 can while controlling the valve be counteractive by means of a pressure fluid capable of reaching, through a connection 14 in control casing 2 the lower end of the control piston 12 thus causing the latter to move upwards as a result of which the edge 9 is removed from valve seat 8 so that fluid can flow freely from the valve body 1 out of the outlet 7.

At the upper end of the valve spindle, i.e. the end facing away from the valve head 4, there is a control device 15 in the shape of an electric or pneumatic motor, a gear drive arrangement or a similar system, which is connected with the valve spindle 3 and so arranged as to turn the latter to and fro about the centre axis of the spindle. The valve spindle 3 is accordingly rotatably located within those parts of the valve unit through which it passes, and the membrane 10 is sufficiently flexible for a certain amount of turning to and fro (about ± 10°) to be possible. This repeated to and fro turning of the valve spindle is transmitted to the valve head 4 and when the valve head is in the closed position it causes its edge 9 to carry out a cutting movement in relation to the valve seat 8. In consequence it becomes possible in connection with the closing of the valve to cut, crush or by other means render harmless the particles or fibres present between the valve head and the valve seat 8 so that complete, sealing closure of the valve is enabled even with fluids difficult to handle.

As mentioned above the valve spindle 3 and valve head 4 are connected by means of the flexible coupling 5, which permits a certain radial movement of valve head 4 in relation to valve spindle 3. This makes it possible for edge 9 of the valve head 4 to centre itself so as to assume a position centred in relation to the spindle 3 and the valve seat 8 while the spring device acts on it, thus ensuring a good seal when the valve is in the closed position.

## Claims

1. A valve comprising a valve head (4) which can be controlled by means of a valve spindle (3) as well as a valve seat (8) cooperating with it, **characterized in that** the valve head (4) can in the closed position of the valve be turned in relation to the valve seat (8).

2. A valve in accordance with claim 1 **characterized in that** either of the parts (4,8) which in the closed position of the valve are in sealing contact with one another possesses a feature acting as a knife-edge (9).

3. A valve in accordance with claim 2 **characterized in that** the edge (9) is circular and surrounds that part of the valve head (4) which faces the valve seat (8).

4. A valve in accordance with claim 3 **characterized in that** the valve head 4 is in the radial direction flexibly connected with the valve spindle (3).

5. A valve in accordance with claim 4 **characterized in that** a flexible coupling (5) is arranged to act on the valve head (4) so as to move it into a position centred in relation to the spindle (3).